# EUROPÄISCHE PATENTSCHRIFT

(11) **EP 2 636 019 B1**
(45) Veröffentlichungstag und Bekanntmachung des Hinweises auf die Patenterteilung: **25.06.2014**
(21) Anmeldenummer: 11776789.7
(22) Anmeldetag: 31.10.2011
(51) Int. Cl.: G06T 7/00

(54) **VERFAHREN UND AUSWERTEVORRICHTUNG ZUR ERMITTLUNG DER LAGE EINER IN EINEM ZU UNTERSUCHENDEN OBJEKT BEFINDLICHEN STRUKTUR MITTELS RÖNTGENCOMPUTERTOMOGRAFIE**
METHOD AND EVALUATION DEVICE FOR DETERMINING THE POSITION OF A STRUCTURE LOCATED IN AN OBJECT TO BE EXAMINED BY MEANS OF X-RAY COMPUTER TOMOGRAPHY
PROCÉDÉ ET DISPOSITIF D'ÉVALUATION SERVANT À DÉTERMINER LA POSITION D'UNE STRUCTURE SE TROUVANT DANS UN OBJET À EXAMINER AU MOYEN D'UNE TOMOGRAPHIE AUX RAYONS X ASSISTÉE PAR ORDINATEUR

(30) Priorität: 02.11.2010 DE 102010043226
(43) Veröffentlichungstag der Anmeldung: 11.09.2013
(73) Patentinhaber: Fraunhofer-Gesellschaft zur Förderung der angewandten Forschung e.V., 80686 München (DE); Mahle International GmbH, 70376 Stuttgart (DE)
(72) Erfinder: OECKL, Steven, 91052 Erlangen (DE); SCHÖN, Werner, 91054 Erlangen (DE); SCHNELL, Holger, 71665 Vaihingen (DE); MÜLLER, Gustav, 73733 Esslingen (DE); PAPADOPOULOS, Ioannis, 71364 Winnenden (DE)
(74) Vertreter: Rau, Schneck & Hübner Patentanwälte Rechtsanwälte PartGmbB
(86) Internationale Anmeldenummer: PCT/EP2011/069083
(87) Internationale Veröffentlichungsnummer: WO 2012/059445

(56) Entgegenhaltungen:
- Holger Schnell: "Hochgeschwindigkeits-Computertomografie zur schnellen, zerstörungsfreien und intelligenten Inspektion und Prozessoptimierung von Aluminium-Gussteilen", , 21. Dezember 2010 (2010-12-21), XP55014846, Gefunden im Internet: URL:http://deposit.ddb.de/cgi-bin/dokserv? idn=101010702x&dok_var=d1&dok_ext=pdf&file name=101010702x.pdf [gefunden am 2011-12-14]
- Werner Schön: "Automatische Charakterisierung eines Zylinderkolben-Kühlkanals anhand von 3D-Computertomographie-Daten", , 1. Mai 2008 (2008-05-01), Seiten 1-40, XP55014848, Universität Erlangen-Nürnberg Gefunden im Internet: URL:http://www.schoen-werner.de/Studienarb eit/Studienarbeit.pdf [gefunden am 2011-12-14]
- "Screenshot from Google Scholar", , 14. Dezember 2011 (2011-12-14), XP55014852, Gefunden im Internet: URL:http://scholar.google.nl/ [gefunden am 2011-12-14]
- Werner Schön: "Screenshot of Homepage", , 10. April 2009 (2009-04-10), XP55014853, Gefunden im Internet: URL:http://www.schoen-werner.de/zweiteSeit e.html [gefunden am 2011-12-14]
- LIN X ET AL: "Visualisation of Left Ventricular Dysfunction in the Virtual Pathological Heart", INFORMATION VISUALISATION (IV), 2010 14TH INTERNATIONAL CONFERENCE, IEEE, PISCATAWAY, NJ, USA, 26. Juli 2010 (2010-07-26), Seiten 635-640, XP031752360, ISBN: 978-1-4244-7846-0
- RUSS JOHN C: "Measurement of depletion layer thickness in metal grains", JOURNAL OF COMPUTER-ASSISTED MICROSCOPY, PLENUM PRESS, NEW YORK, NY, US, Bd. 3, Nr. 1, 1. März 1991 (1991-03-01), Seiten 7-13, XP009154651, ISSN: 1040-7286

## Beschreibung

Die Erfindung betrifft ein Verfahren und eine Auswertevorrichtung zur Ermittlung der Lage einer in einem zu untersuchenden Objekt befindlichen Struktur mittels Röntgencomputertomografie.

Die automatische und zerstörungsfreie Prüfung von Objekten bzw. Bauteilen mittels Röntgencomputertomografie gewinnt in der Qualitätssicherung zunehmend an Bedeutung. Die Herausforderung besteht einerseits darin, Materialfehler, wie beispielsweise Poren oder Risse zuverlässig zu erkennen. Andererseits ist das dimensionelle Vermessen von Bauteilen von großer Bedeutung. Dieses Vermessen von Bauteilen zur Überprüfung, ob die geforderten Fertigungstoleranzen eingehalten werden, gestaltet sich jedoch schwierig. Aus dem mittels Röntgencomputertomografie ermittelten Volumendatensatz des zu untersuchenden Bauteils kann zwar prinzipiell der Abstand zwischen zwei ausgewählten Punkten, beispielsweise zur Lagebestimmung einer innenliegenden Struktur in dem Bauteil, ermittelt werden, jedoch wird diese Abstandsermittlung durch Störeffekte, wie beispielsweise Rauschen, Streustrahlung oder Strahlaufhärtung erschwert, da diese Störeffekte die Grauwerte der Voxel in dem Volumendatensatz verändern bzw. verfälschen. Darüber hinaus kommt es beim Übergang zwischen zwei unterschiedlichen Medien, wie beispielsweise dem Objektmaterial und der in einem innenliegenden Hohlraum befindlichen Luft zu Grauwertverschmierungen, die eine dimensionelle Vermessung des Bauteils erschweren.

Der Fachartike Lin X. et al: "Visualisation of Left Ventricular Dysfunction in the Virtual Pathological Heart", 14th International Conference Information Visualisation, IEEE, 26-07-2010, pp. 635-640, betrifft ein Verfahren zur Visualisierung der linken Herzkammer des menschlichen Herzens anhand von Daten, die mittels Magnetresonanztomographie ermittelt wurden. Zur Visualisierung der linken Herzkammer wird deren Oberfläche bzw. die innere Oberfläche des Herzen rekonstruiert. Zur Bestimmung der Oberfläche werden aus einer dreidimensionalen Punktwolke zweidimensionale Schnitte gebildet, deren Pixel in Abhängigkeit von der Zugehörigkeit zur der linken Herzkammer binarisiert werden. Die binarisierten Schnitte werden anschließend zu einer dreidimensionalen Oberfläche zusammengefügt.

Der Fachartikel Russ J.C.: "Measurement of Depletion Layer Thickness in Metal Grains" Journal of Computer-Assisted Microscopy, Vol. 3, Nr. 1, 1991, pp. 7-13, offenbart ein Verfahren zur Dickenmessung einer Verarmungsschicht, in der eine geringe Anzahl an Kohlenstoffpartikeln entlang der Korngrenzen von Metallkörnern vorliegt. Die Schichtdicke wird anhand des euklidischen Abstands der einzelnen Kohlenstoffpartikel zu der Korngrenze ermittelt.

Der Erfindung liegt die Aufgabe zugrunde, ein einfaches, genaues und automatisches Verfahren zur Ermittlung der Lage einer in einem zu untersuchenden Objekt bzw. Bauteil befindlichen ringförmigen Struktur mittels Röntgencomputertomografie zu schaffen.

Diese Aufgabe wird durch ein Verfahren mit den Merkmalen des Anspruchs 1 gelöst. Aus den mittels Röntgencomputertomografie ermittelten Projektionsdatensätzen des zu untersuchenden Objekts bzw. Bauteils wird zunächst in üblicher Weise ein Volumendatensatz rekonstruiert. Anschließend wird eine Schnittebene durch die in dem Objekt befindliche und in ihrer räumlichen Lage zu bestimmende Struktur definiert. Diese Struktur ist beispielsweise ein Hohlraum. Die Schnittebene ist prinzipiell frei wählbar und ergibt sich aus der Messaufgabe. Aus dem Volumendatensatz wird anhand der definierten Schnittebene ein Schnittdatensatz ermittelt, der das Objekt in der Schnittebene abbildet. Um die Lage der Struktur relativ zu einer Oberfläche des Objektes einfach und genau bestimmen zu können, wird der Schnittdatensatz zunächst binarisiert, sodass ein Binärdatensatz erzeugt wird. Zur Erzielung einer hohen Genauigkeit muss das Binarisieren möglichst exakt erfolgen, sodass möglichst keine Voxel des Binärdatensatzes fälschlicherweise dem Objekt oder nicht dem Objekt zugeordnet werden. Der Binärdatensatz enthält somit Voxel mit einem ersten Binärwert, die das Objekt charakterisieren und Voxel mit einem zweiten Binärwert, die nicht das Objekt charakterisieren, also den Hintergrund, Artefakte, nicht interessierende Strukturen um die in ihrer Lage zu bestimmende Struktur.

Aus den den zweiten Binärwert aufweisenden Voxeln des Binärdatensatzes werden anschließend die Voxel ermittelt, die ausschließlich die interessierende Struktur abbilden. Diese Voxel werden als Strukturvoxel bezeichnet. Diese Voxel werden beispielsweise derart ermittelt, dass nebeneinander liegende Voxel, die einheitlich den zweiten Binärwert aufweisen, hinsichtlich ihrer Form, Größe, Lage und/oder Umgebung analysiert werden, sodass eindeutig die interessierende Struktur bzw. die entsprechenden Strukturvoxel ermittelt werden können. Um die Lage der interessierenden Struktur relativ zu der Objektoberfläche ermitteln zu können, werden in dem Binärdatensatz weiterhin die die Objektoberfläche abbildenden Voxel ermittelt. Diese Voxel werden als Oberflächenvoxel bezeichnet. Die Oberflächenvoxel ergeben sich in dem Binärdatensatz aus dem Übergang zwischen den den ersten Binärwert aufweisenden Voxeln, die das Objekt charakterisieren, und den den zweiten Binärwert aufweisenden Voxeln, die nicht das Objekt charakterisieren. Die an diesem Übergang befindlichen Voxel, die den ersten Binärwert aufweisen, stellen die Oberflächenvoxel dar.

Anhand der ermittelten Oberflächenvoxel wird anschließend ein Abstandsdatensatz ermittelt. Die Voxel des Abstandsdatensatzes werden als Abstandsvoxel bezeichnet. Jedem Abstandsvoxel wird ein Abstandswert zugeordnet, der den kleinsten Abstand des jeweiligen Abstandsvoxels zu den Oberflächenvoxeln charakterisiert. Der kleinste Abstand kann nach unterschiedlichen Metriken berechnet werden, beispielsweise nach der euklidischen Metrik oder nach der Manhattan-Metrik bzw. Cityblock-Metrik. Vorzugsweise werden den Abstandsvoxeln Abstandswerte zugeordnet, die den kleinsten Abstand zu den Oberflächenvoxeln in ganzen Voxeln charakterisieren.

Ausgehend von dem Abstandsdatensatz kann die räumliche Lage der Struktur relativ zu der Objektoberfläche einfach ermittelt werden, indem aus dem Abstandsdatensatz die den Strukturvoxeln entsprechenden Abstandsvoxel ausgewählt und deren Abstandswerte ausgewertet werden.

Das Definieren von mehreren Schnittebenen und das Ermitteln und Auswerten zugehöriger Schnittdatensätze ermöglicht die Überprüfung von ringförmigen Strukturen, insbesondere von ringförmigen Hohlräumen bzw. Kanälen. Die Lagebestimmung erfolgt insbesondere anhand von Zentralschnitten, also von Schnittebenen, die durch eine gemeinsame Achse verlaufen. Somit kann in vordefinierten Winkelabständen die Lage der Struktur in dem Objekt bestimmt werden. Dies ist beispielsweise vorteilhaft bei Kolben, insbesondere Zylinderkolben, anwendbar, die einen ringförmigen Kühlkanal aufweisen, dessen Lage überprüft werden soll.

Wird aus diesen Abstandswerten beispielsweise der Minimalwert ermittelt, so charakterisiert dieser den minimalen Abstand der Struktur zu der Objektoberfläche. Entsprechend charakterisiert der Maximalwert der Abstandswerte einen maximalen Abstand der Struktur zu der Objektoberfläche.

Das erfindungsgemäße Verfahren basiert nicht darauf, dass ein Abstand zwischen zwei ausgewählten Punkten bzw. Voxeln ermittelt wird, sondern ermittelt die räumliche Lage der interessierenden Struktur, beispielsweise den minimalen Abstand zu der Objektoberfläche unabhängig davon, wie die Struktur in dem Objekt angeordnet ist. Dadurch, dass die Lage der Struktur in dem Objekt aufgrund von Fertigungstoleranzen variieren kann, führt eine Abstandsbestimmung von zwei statisch oder manuell ausgewählten Punkten bzw. Voxeln zu einer ungenauen Lagebestimmung. Demgegenüber wird bei dem erfindungsgemäßen Verfahren durch die Berechnung und Auswertung des Abstandsdatensatzes eine einfache, genaue und dynamische Lagebestimmung der interessierenden Struktur ermöglicht, da das Verfahren automatisch und lageunabhängig die gewünschten Abstandswerte liefert. Die Abstandswerte können durch Verrechnung mit der bekannten Voxelgröße in ein metrisches Längenmaß umgerechnet werden, sodass ein unmittelbarer Vergleich mit den Konstruktionsdaten möglich ist, um die Einhaltung von Fertigungstoleranzen zu überprüfen.

Ein Verfahren nach Anspruch 2 gewährleistet eine einfache und genaue Lagebestimmung, da aufgrund der Ausrichtung der Oberflächenvoxel der Abstandsdatensatz einfach ermittelbar ist. Erforderliche Rechenoperationen können aufgrund der Ausrichtung zeilen- und/oder spaltenweise erfolgen.

Ein Verfahren nach Anspruch 3 ermöglicht auf einfache Weise eine Lagekorrektur des Objektes relativ zu dem kartesischen Auswerte-Koordinatensystem. Insbesondere ermöglicht die Korrektur bzw. Transformation des Volumendatensatzes eine Lagekorrektur des Objektes relativ zu dem Koordinatensystem in einer beliebigen Schnittebene. Mit nur einer Transformation ist somit das Objekt in beliebigen Schnittebenen relativ zu dem Koordinatensystem ausgerichtet. Zur Lagekorrektur wird zunächst der Volumendatensatz binarisiert. Dies erfolgt beispielsweise mittels einer Schwellwertbinarisierung, welche die Voxel des Volumendatensatzes in zwei Klassen ordnet, indem aus der Verteilungsfunktion der zu den Voxeln gehörigen Grauwerte ein Schwellwert berechnet wird, welcher die dem Objekt zugehörigen Grauwerte von den nicht dem Objekt zugehörigen Grauwerten trennt. Mittels des Schwellwertes wird anschließend die Binarisierung des Volumendatensatzes durchgeführt. Zur Lageerkennung des Objekts relativ zu dem Koordinatensystem werden zunächst zwei unterschiedliche Korrektur-Schnittebenen durch das Objekt definiert. Zu diesen Korrektur-Schnittebenen werden aus dem binären Volumendatensatz die zugehörigen binären Korrektur-Schnittdatensätze ermittelt, die das Objekt in der jeweiligen Schnittebene abbilden. Aus jedem der Korrektur-Schnittdatensätze wird ein Verkippungswinkel ermittelt, der die Lage der die Objektoberfläche abbildenden Oberflächenvoxel relativ zu einer der Koordinatenachsen charakterisiert. Die zur Lagekorrektur verwendeten Oberflächenvoxel können sich je nach Definition der Korrektur-Schnittebenen von den zur Ermittlung des Abstandsdatensatzes verwendeten Oberflächenvoxeln unterscheiden und werden - sofern eine Unterscheidung erforderlich ist - auch als Korrektur-Oberflächenvoxel bezeichnet. Aus dem auf der Oberfläche liegenden Schnittpunkt der Korrektur-Schnittebenen und den Verkippungswinkeln ist die Lage des Objekts relativ zu dem Koordinatensystem eindeutig bestimmt. Mit dem Schnittpunkt und den Verkippungswinkeln wird eine affine Transformation des Volumendatensatzes durchgeführt und das durch die Objektvoxel abgebildete Objekt durch Rotation und Translation relativ zu dem Koordinatensystem ausgerichtet.

Ein Verfahren nach Anspruch 4 ermöglicht eine äußerst exakte Binarisierung des Schnittdatensatzes. Zunächst werden mittels des in der digitalen Bildverarbeitung bekannten Canny-Algorithmus die Kanten des Objekts detektiert und die zugehörigen Kantenvoxel bestimmt. Ausgehend von den ermittelten Kanten erfolgt die Binarisierung derart, dass durch jedes Voxel des Schnittdatensatzes mehrere virtuelle und unterschiedlich ausgerichtete Geraden gelegt werden und die Anzahl der Schnittpunkte der jeweiligen Gerade mit den Kanten ermittelt wird. Das jeweilige Voxel erhält in dem Binärdatensatz einen das Objekt charakterisierenden ersten Binärwert, wenn die Mehrheit der Geraden eine ungerade Anzahl an Schnittpunkten mit den Kanten hat. Entsprechend erhält das jeweilige Voxel in dem Binärdatensatz einen nicht das Objekt charakterisierenden zweiten Binärwert, wenn die Mehrheit der Geraden eine gerade Anzahl an Schnittpunkten mit den Kanten hat. Eine gerade Anzahl schließt auch die Null ein. Dieses Binarisierungsverfahren wird nachfolgend auch als Canny-Binarisierung bezeichnet.

Ein Verfahren nach Anspruch 5 gewährleistet auf einfache Weise das Ermitteln der die Struktur abbildenden Strukturvoxel. Zunächst wird auf Basis des Binärdatensatzes eine Zusammenhangsanalyse durchgeführt, mit der zusammenhängende Bereiche ermittelt und als solche definiert werden. Die zusammenhängenden Bereiche werden auch als Binary Large Objects (Blobs) bezeichnet. Hierzu werden zusammenhängende bzw. benachbarte Voxel, die einen einheitlichen Binärwert aufweisen, jeweils einem Bereich zugeordnet und die ermittelten Bereiche sowie die zugehörigen Voxel in einer Liste vermerkt. Anschließend werden die ermittelten Bereiche hinsichtlich ihrer Eigenschaften ausgewertet, um den die Struktur abbildenden Bereich eindeutig identifizieren zu können. Typische auswertbare Eigenschaften sind beispielsweise die Form, Größe, Lage und/oder Umgebung eines Bereichs. Hierzu werden beispielsweise die Anzahl der zu einem Bereich gehörigen Voxel sowie die Höhe und Breite des Bereichs ausgewertet. Anhand der ausgewerteten Eigenschaften werden die Bereiche klassifiziert, sodass eindeutig der die Struktur abbildende Bereich mit den zugehörigen Strukturvoxeln ermittelt wird.

Ein Verfahren nach Anspruch 6 erleichtert die Auswertung des Abstandsdatensatzes, da dieser zur Lagebestimmung der Struktur in einfacher Weise mit dem Struktur-Binärdatensatz verrechnet werden kann.

Ein Verfahren nach Anspruch 7 ermöglicht eine einfache Ermittlung der Oberfläche, relativ zu der die Lage der Struktur bestimmt werden soll. Die die Oberfläche abbildenden Oberflächenvoxel werden derart ermittelt, dass die Voxel in dem Binärdatensatz in einer jeweiligen Laufrichtung durchlaufen werden, also je nach Lage der zu ermittelnden Oberfläche reihenoder zeilenweise. Wird beim Durchlaufen der Voxel in der Laufrichtung erstmalig ein Voxel detektiert, das dem Objekt zugeordnet ist und den ersten Binärwert aufweist, so stellt dieses Voxel ein Oberflächenvoxel dar und wird entsprechend vermerkt. Die Voxel werden insbesondere reihenund/oder zeilenweise durchlaufen.

Ein Verfahren nach Anspruch 8 vereinfacht das Berechnen des Abstandsdatensatzes. Dadurch, dass in dem Oberflächen-Binärdatensatz ausschließlich die Oberflächenvoxel den ersten Binärwert haben, ist der Ausgangspunkt für die Berechnung des Abstandsdatensatzes in einfacher Weise vorgegeben.

Ein Verfahren nach Anspruch 9 gewährleistet eine einfache Berechnung des Abstandsdatensatzes. Ausgehend von dem Oberflächen-Binärdatensatz, in dem ausschließlich die Oberflächenvoxel den ersten Binärwert aufweisen, kann allen weiteren Voxeln jeweils ein Abstandswert zugeordnet werden, der den kleinsten Abstand des jeweiligen Voxels zu den Oberflächenvoxeln charakterisiert. Durch diese Zuordnung wird der Oberflächen-Binärdatensatz nach und nach in den Abstandsdatensatz umgerechnet. Der Abstandsdatensatz enthält somit die Oberflächenvoxel, die einen Abstandswert von Null aufweisen und die Abstandsvoxel, die jeweils zugehörige Abstandswerte aufweisen. Der Oberflächen-Binärdatensatz wird somit mittels einer Distanztransformation in den Abstandsdatensatz umgewandelt.

Ein Verfahren nach Anspruch 10 ermöglicht auf einfache Weise die Berechnung der den Strukturvoxeln entsprechenden Abstandsvoxel. Anschaulich wird die Struktur mittels des Struktur-Binärdatensatzes aus dem Abstandsdatensatz ausgestanzt, indem dieser mit dem Struktur-Binärdatensatz multipliziert wird.

Ein Verfahren nach Anspruch 11 gewährleistet auf einfache Weise die Überprüfung der Einhaltung von Fertigungstoleranzen. Insbesondere wird ein Minimalwert ermittelt. Durch die Ermittlung des Minimalwertes können beispielsweise minimale Wandstärken ermittelt werden, die für die Qualitätssicherung von besonderer Bedeutung sind.

Ein Verfahren nach Anspruch 13 gewährleistet eine einfache und genaue Auswertung der ermittelten Extremwerte entlang der ringförmigen Struktur. Dadurch, dass die Extremwerte in Abhängigkeit der Lage der Schnittebenen dargestellt werden, werden Lageveränderungen auf einfache Weise erkennbar. Durch die Nachbearbeitung der Extremwerte werden insbesondere Messfehler reduziert. Die Nachbearbeitung erfolgt beispielsweise derart, dass die ermittelten Extremwerte geglättet werden oder auf deren Basis eine kontinuierliche Kurve approximiert wird. Weiterhin kann mittels der bekannten Voxelgröße der metrische Abstand aus den ermittelten Extremwerten berechnet werden.

Der Erfindung liegt ferner die Aufgabe zugrunde, eine Auswertevorrichtung zur einfachen, genauen und automatischen Ermittlung der Lage einer in einem zu untersuchenden Objekt befindlichen ringförmigen Struktur mittels Röntgencomputertomografie zu schaffen.

Diese Aufgabe wird durch eine Auswertevorrichtung mit den Merkmalen des Anspruchs 14 gelöst. Die Vorteile der erfindungsgemäßen Auswertevorrichtung entsprechen den bereits beschriebenen Vorteilen des erfindungsgemäßen Verfahrens. Insbesondere kann die Auswertevorrichtung auch entsprechend den Ansprüchen 2 bis 13 weitergebildet werden.

Ein Röntgencomputertomograf nach Anspruch 15 ermöglicht eine Prüfung des zu untersuchenden Objektes unmittelbar nach seiner Herstellung, sodass eine Inline-Prüfung erzielbar ist. Eine entsprechende Inline-Prüfanlage weist beispielsweise eine Herstellungsvorrichtung und ein zugehöriges Handhabungsgerät auf, mittels dem das hergestellte Objekt bzw. Bauteil der Herstellungsvorrichtung entnommen und dem Röntgencomputertomografen zugeführt wird. Der Röntgencomputertomograf erstellt in bekannter Weise Projektionsdatensätze des Objektes, aus denen anschließend der Volumendatensatz rekonstruiert wird. Der Volumendatensatz, der in Voxel untergliedert und jeweils zugehörige Grauwerte aufweist, stellt die Grundlage für das erfindungsgemäße Verfahren dar. Der Volumendatensatz wird der Auswertevorrichtung bereitgestellt, die in der beschriebenen Weise die Lage der zu prüfenden Struktur bestimmt. Durch Auswerten der ermittelten Abstandswerte bzw. Extremwerte kann anschließend die Entscheidung getroffen werden, ob das Bauteil den Qualitätsanforderungen entspricht oder nicht.

Weitere Merkmale, Vorteile und Einzelheiten der Erfindung ergeben sich aus der nachfolgenden Beschreibung eines Ausführungsbeispiels. Es zeigen:

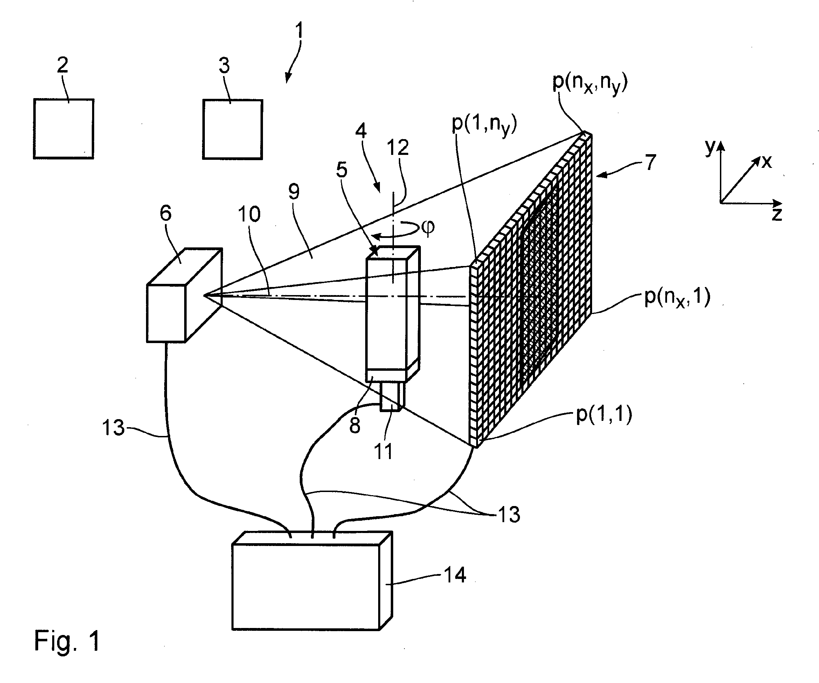

- Fig. 1: eine schematische Darstellung einer Inline-Prüfanlage mit einem Röntgencomputertomografen, der eine Auswertevorrichtung zur Ermittlung der Lage einer in einem zu untersuchenden Objekt befindlichen Struktur mittels Röntgencomputertomografie aufweist,
- Fig. 2: eine Schnittdarstellung durch ein als Kolben ausgebildetes Objekt mit einer als Kühlkanal ausgebildeten Struktur entlang einer Schnittebene S₁,
- Fig. 3: eine Prinzipdarstellung eines zu der Schnittebene S₁ gehörigen Schnittdatensatzes des Kolbens,
- Fig. 4: eine Prinzipdarstellung des zu der Schnittebene S₁ gehörigen Schnittdatensatzes mit dem an einem Auswerte-Koordinatensystem ausgerichteten Kolben, und
- Fig. 5: eine Prinzipdarstellung eines Abstandsdatensatzes zur Lagebestimmung des Kühlkanals relativ zu der Oberfläche des Kolbens.

Eine Inline-Prüfanlage 1 weist eine Herstellungsvorrichtung 2, ein Handhabungsgerät 3 und einen Röntgencomputertomografen 4 auf. Die Inline-Prüfanlage 1 dient zur Prüfung von Objekten 5 bzw. Bauteilen in Form von Kolben unmittelbar nach deren Herstellung. Bei den Kolben 5 handelt es sich beispielsweise um Zylinderkolben. Mittels des Handhabungsgeräts 3 sind die in der Herstellungsvorrichtung 2 hergestellten Kolben 5 dem Röntgencomputertomografen 4 zuführbar, der eine Prüfung der hergestellten Kolben 5 durchführt.

Der Röntgencomputertomograf 4 weist eine Röntgenquelle 6 und einen zugehörigen Röntgendetektor 7 auf. Zwischen der Röntgenquelle 6 und dem Röntgendetektor 7 ist ein Objektträger 8 angeordnet, mittels dem die zu untersuchenden Kolben 5 positionierbar sind.

Die Röntgenquelle 6 dient zum Erzeugen einer in Richtung der Kolben 5 kegelförmig austretenden Röntgenstrahlung 9. Die Röntgenstrahlung 9 verläuft im Wesentlichen symmetrisch zu einer Mittellängsachse 10 des Röntgencomputertomografen 4. Die Röntgenquelle 6 ist beispielsweise als Röntgenröhre oder als Linearbeschleuniger ausgebildet, deren Aufbau bekannt ist.

Der Röntgendetektor 7 erstreckt sich im Wesentlichen in einer x-y-Ebene, die durch eine x-Richtung und eine senkrecht dazu verlaufende y-Richtung definiert ist. Die Mittellängsachse 10 definiert eine z-Richtung, die im Wesentlichen senkrecht zu der x-y-Ebene verläuft. Der Röntgendetektor 7 weist in x- und y-Richtung eine Vielzahl von Pixeln p auf, die im Einzelnen mit p (x, y) bezeichnet werden, wobei für x=1 bis nₓ und für y=1 bis n_{y} gilt. Der Röntgendetektor 7 ist beispielsweise als Flachbilddetektor ausgebildet, dessen Aufbau bekannt ist.

Der Objektträger 8 ist mittels eines elektrischen Antriebsmotors 11 um eine parallel zu der y-Richtung verlaufende Drehachse 12 drehbar. Die Verdrehstellung des Objektträgers 8 und somit des darauf angeordneten Kolbens 5 wird durch einen Verdrehwinkel ϕ gekennzeichnet, der eine Projektionsrichtung definiert. Die Röntgenquelle 6, der Röntgendetektor 7 und der Antriebsmotor 11 sind über Signalleitungen 13 mit einer Auswertevorrichtung 14 verbunden. Die Auswertevorrichtung 14 dient einerseits zur Steuerung der Röntgenquelle 6 sowie des Antriebsmotors 11 und andererseits zur Auswertung der mittels des Röntgendetektors 7 detektierten Röntgenstrahlung 9.

Der zu untersuchende Kolben 5 weist einen Kolbenboden 15 und einen daran angeordneten Kolbenschaft 16 auf, die relativ zu einer zentralen Kolbenachse 17 im Wesentlichen symmetrieähnlich ausgebildet sind. Der Kolben 5 weist einen in eine Nut 18 eingegossenen Ringträger 19 auf, der üblicherweise aus austenitischem Gusseisen besteht. Im Inneren des Kolbens 5 ist eine innenliegende Struktur 20 in Form eines ringförmigen, umlaufenden Kühlkanals 20 ausgebildet. Der Kühlkanal 20 kann relativ zu dem Kolbenboden 15 geneigt angeordnet sein, sodass dessen minimaler Abstand A_{B} relativ zu dem Kolbenboden 15 sowie dessen minimaler Abstand A_{S} relativ zu dem Kolbenschaft 16 entlang des Kühlkanals 20 im Allgemeinen variieren. Der Röntgencomputertomograf 4 sowie die zugehörige Auswertevorrichtung 14 dienen zur Bestimmung der Lage des Kühlkanals 20 in dem Kolbenschaft 16, also zur Bestimmung der minimalen Abstände A_{B} und A_{S}, insbesondere als Funktion ihrer Umfangslage bzw. des Verdrehwinkels ϕ.

Nachfolgend wird die Prüfung des Kolbens 5 beschrieben. Der Kolben 5 wird mittels des Handhabungsgeräts 3 aus der Herstellungsvorrichtung 2 entnommen und auf dem Objektträger 8 angeordnet. Mittels der Röntgenquelle 6 wird der Kolben 5 in üblicher Weise mit Röntgenstrahlung 9 bestrahlt. Der Röntgendetektor 7 detektiert die auf ihn treffende Röntgenstrahlung 9. Für jedes Pixel p (x, y) wird die detektierte Röntgenstrahlung 9 in einen entsprechenden Grauwert gewandelt. Der entsprechende Projektionsdatensatz mit den Grauwerten wird zur Auswertung an die Auswertevorrichtung 14 übertragen. Dieser Bestrahlungsvorgang wird für eine Vielzahl von Verdrehwinkeln ϕ wiederholt. Aus den Projektionsdatensätzen zu den Verdrehwinkeln ϕ wird mittels der Auswertevorrichtung 14 ein Volumendatensatz des Kolbens 5 rekonstruiert. Der dreidimensionale Volumendatensatz bildet den Kolben 5 ab und weist eine Vielzahl von als Voxeln bezeichneten Volumeneinheiten auf, die jeweilige Grauwerte haben. Der Volumendatensatz bildet den Ausgangspunkt für die Lagebestimmung des Kühlkanals 20.

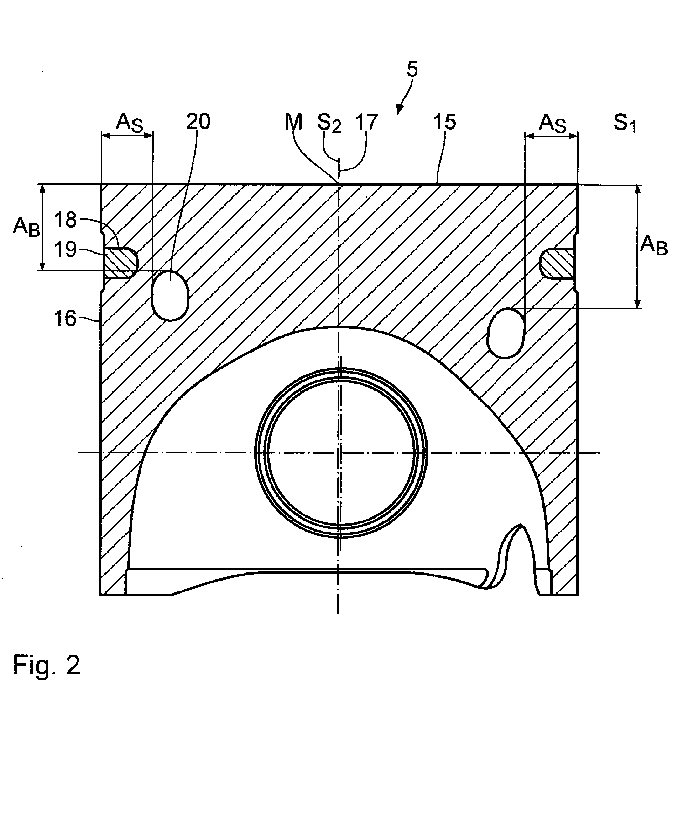

Zunächst erfolgt eine Lageerkennung und Lagekorrektur des Kolbens 5 relativ zu einem kartesischen Auswerte-Koordinatensystem K, das durch senkrecht zueinander verlaufende Koordinatenachsen gebildet ist. Die Koordinatenachsen werden nachfolgend mit u, v und w bezeichnet. Zur Lagekorrektur werden zwei sich in der Kolbenachse 17 schneidende Korrektur-Schnittebenen S₁ und S₂ definiert. Diese Schnittebenen S₁ und S₂ verlaufen senkrecht zueinander und sind in Fig. 2 dargestellt. Der Volumendatensatz wird zunächst zu einem binären Volumendatensatz binarisiert. Dies erfolgt mittels einer Schwellwertbinarisierung, die die Voxel des Volumendatensatzes dem Kolben 5 oder nicht dem Kolben 5 zuordnet. Aus der Verteilungsfunktion aller Grauwerte zu den Voxeln des Volumendatensatzes wird ein Schwellwert berechnet, der die Grauwerte zuverlässig in diese Klassen trennt. Aus dem binären Volumendatensatz werden anschließend zwei Korrektur-Schnittdatensätze ermittelt bzw. extrahiert, die den Kolben 5 in der jeweiligen Schnittebene S₁ und S₂ abbilden.

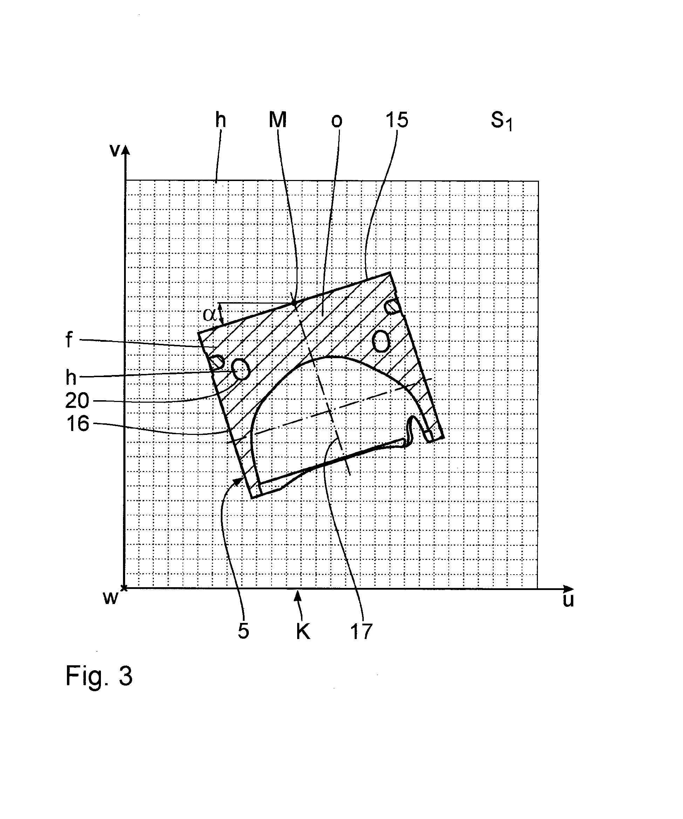

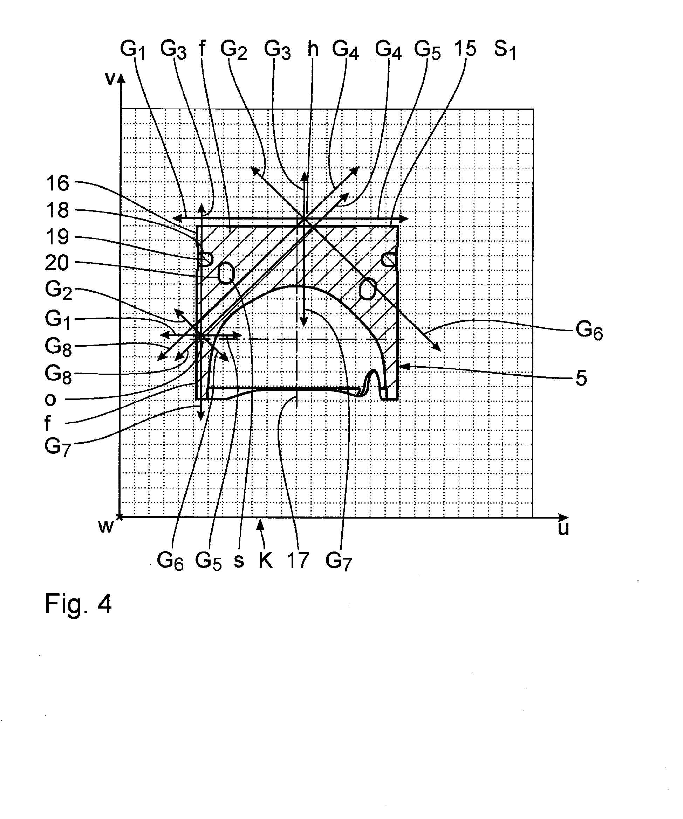

Fig. 3 zeigt den Korrektur-Schnittdatensatz zu der Korrektur-Schnittebene S₁, wobei anstelle der den Kolben 5 abbildenden Voxel zur besseren Veranschaulichung der Kolben 5 selbst abgebildet ist. Der KorrekturSchnittdatensatz weist zur einfacheren Darstellung lediglich eine geringe Auflösung auf, d.h. eine geringe Anzahl an Voxeln. In dem Korrektur-Schnittdatensatz weisen die Voxel, die den Kolben 5 abbilden, einen ersten Binärwert auf. Diese Voxel werden nachfolgend als Objektvoxel o bezeichnet. Die nicht den Kolben 5 abbildenden Voxel, also die Voxel, die den Hintergrund und den Kühlkanal 20 abbilden, weisen einen zweiten Binärwert auf. Diese Voxel werden nachfolgend als Hintergrundvoxel h bezeichnet. Darüber hinaus werden die Objektvoxel o, die die Oberfläche des Kolbens 5 charakterisieren, als Oberflächenvoxel f bezeichnet. Anhand der Oberflächenvoxel f des Kolbenbodens 15 wird ein Verkippungswinkel α relativ zu der u-Koordinatenachse ermittelt. Entsprechend wird in dem Korrektur-Schnittdatensatz zu der Schnittebene S₂ ein Verkippungswinkel α relativ zu der w-Koordinatenachse ermittelt. Aus den Verkippungswinkeln α sowie dem Mittelpunkt M des Kolbenbodens 15 ist die Lage des Kolbens 5 in dem kartesischen Koordinatensystem K eindeutig bestimmt. Durch eine affine Transformation des Volumendatensatzes anhand der Verkippungswinkel α und des Mittelpunktes M wird der Volumendatensatz derart umgerechnet, dass die Oberflächenvoxel f des Kolbenbodens 15 parallel zu der u- und w-Koordinatenachse verlaufen. Der Kolben 5 bzw. die den Kolben 5 abbildenden Objektvoxel o sind somit in dem Auswerte-Koordinatensystem K ausgerichtet. Dies ist in Fig. 4 dargestellt.

Zur Lagebestimmung des Kühlkanals 20 werden nun eine Vielzahl von Zentralschnitten durchgeführt. Hierzu werden Schnittebenen S₁ bis Sₙ in vordefinierten Winkelabständen durch die Kolbenachse 17 gelegt. Beispielsweise werden in Winkelabständen von 1° Schnittebenen definiert, sodass sich für die Prüfung des Kühlkanals 20 360 Schnittebenen S₁ bis S₃₆₀ ergeben. Anschließend wird zu jeder der Schnittebenen S₁ bis Sₙ aus dem zur Lagekorrektur umgerechneten Volumendatensatz ein Schnittdatensatz ermittelt bzw. extrahiert, der den Kolben 5 in dieser Schnittebene S₁ bis Sₙ abbildet. In Fig. 4 ist entsprechend Fig. 3 der Schnittdatensatz zu der Schnittebene S₁ dargestellt.

Zunächst wird dieser Schnittdatensatz zu einem Binärdatensatz binarisiert. Um eine möglichst exakte Binarisierung zu erzielen, werden zunächst mittels des bekannten Canny-Algorithmus die Kanten des Kolbens 5 in dem Schnittdatensatz ermittelt. Die Kanten ergeben sich im Wesentlichen aus der Oberfläche des Kolbens 5, dem in der Nut 18 angeordneten Eisenring 19 und dem Kühlkanal 20. Die Kanten des Kolbens 5 werden durch nicht näher dargestellte Kantenvoxel charakterisiert. Anschließend werden durch jedes Voxel des Schnittdatensatzes mehrere unterschiedlich ausgerichtete Geraden G₁ bis G₈ gelegt und die Anzahl der Schnittpunkte dieser Geraden G₁ bis G₈ mit den Kanten ermittelt. In Fig. 4 ist dies für ein Hintergrundvoxel h und ein Objektvoxel o mit jeweils acht Geraden G₁ bis G₈ veranschaulicht.

Die dem Hintergrundvoxel h zugehörigen Geraden G₁ bis G₈ weisen entweder keinen Schnittpunkt oder eine gerade Anzahl an Schnittpunkten mit den Kanten auf. Demgegenüber weisen die dem Objektvoxel o zugehörigen Geraden G₁ bis G₈ jeweils eine ungerade Anzahl an Schnittpunkten mit den Kanten auf. Hierdurch können Voxel eindeutig dem Kolben 5 oder nicht dem Kolben 5 zugeordnet werden. Selbst Fehler im Kantenverlauf können ausgeglichen werden, da anhand der Mehrheit der Geraden G₁ bis G₈ entschieden wird. Den Objektvoxeln o wird in dem Binärdatensatz ein erster Binärwert zugeordnet, wohingegen den Hintergrundvoxeln h ein zweiter Binärwert zugeordnet wird.

Aus dem Binärdatensatz werden anschließend die den Kühlkanal 20 abbildenden Voxel ermittelt. Diese Voxel werden nachfolgend als Strukturvoxel s bezeichnet. Hierzu wird eine sog. Zusammenhangsanalyse durchgeführt. Zusammenhängende Voxel, die einen einheitlichen Binärwert haben, werden jeweils einem Bereich zugeordnet. Diese Bereiche werden auch als Binary Large Objects bezeichnet. Die Bereiche sowie die zugehörigen Voxel werden in einer Liste vermerkt. Anschließend werden die Bereiche hinsichtlich ihrer Form, Größe, Lage und/oder Umgebung ausgewertet. Typische Bereiche sind der Kolben 5, der Kühlkanal 20, Artefakte aufgrund des Eisenrings 19 und der den Kolben 5 umgebende Hintergrund. Durch die Auswertung der Form, Größe, Lage und/oder Umgebung dieser Bereiche können die Strukturvoxel s bestimmt werden, die dem Kühlkanal 20 zugehören. Zur Auswertung der Bereiche wird beispielsweise lediglich die links der Kolbenachse 17 angeordnete Hälfte des Kolbens 5 herangezogen, sodass lediglich ein Bereich ermittelt wird, der als Kühlkanal 20 klassifiziert wird. Zu diesem Bereich wird anschließend ein Struktur-Binärdatensatz erzeugt, in dem die Strukturvoxel s einen ersten Binärwert und alle weiteren Voxel einen zweiten Binärwert haben.

Anschließend werden aus dem Binärdatensatz die Oberflächenvoxel f zu einer Oberfläche des Kolbens 5 ermittelt. Nachdem die Abstände A_{B} und A_{S} bestimmt werden sollen, müssen einerseits die Oberflächenvoxel f des Kolbenbodens 15 und andererseits die Oberflächenvoxel f des Kolbenschafts 16 ermittelt werden. Zur Ermittlung der Oberflächenvoxel f des Kolbenbodens 15 wird der Binärdatensatz ausgehend von der der u-Koordinatenachse gegenüberliegenden Seite reihenweise in einer jeweiligen Laufrichtung durchlaufen. Wird in einer der durchlaufenen Reihen erstmalig ein Voxel ermittelt, das ein Objektvoxel o ist und somit dem Kolben 5 zugehört, so stellt dieses Objektvoxel o gleichzeitig ein Oberflächenvoxel f dar. Entsprechend wird zur Ermittlung der Oberfläche des Kolbenschafts 16 der Binärdatensatz ausgehend von der v-Koordinatenachse zeilenweise durchlaufen. Wird in einer der Zeilen erstmalig ein Voxel ermittelt, das ein Objektvoxel o ist und dem Kolben 5 zugehört, stellt dieses Objektvoxel o gleichzeitig ein Oberflächenvoxel f dar. Zu jeder der ermittelten Oberflächen wird ein Oberflächen-Binärdatensatz erzeugt, in dem die Oberflächenvoxel f einen ersten Binärwert und alle weiteren Voxel einen zweiten Binärwert haben.

Nachfolgend ist ausgehend von dem Oberflächen-Binärdatensatz zu dem Kolbenschaft 16 die Bestimmung des Abstandes A_{S} beschrieben. Die Bestimmung des Abstandes A_{B} zu dem Kolbenboden 15 erfolgt entsprechend ausgehend von dem Oberflächen-Binärdatensatz zu den Oberflächenvoxeln f des Kolbenbodens 15.

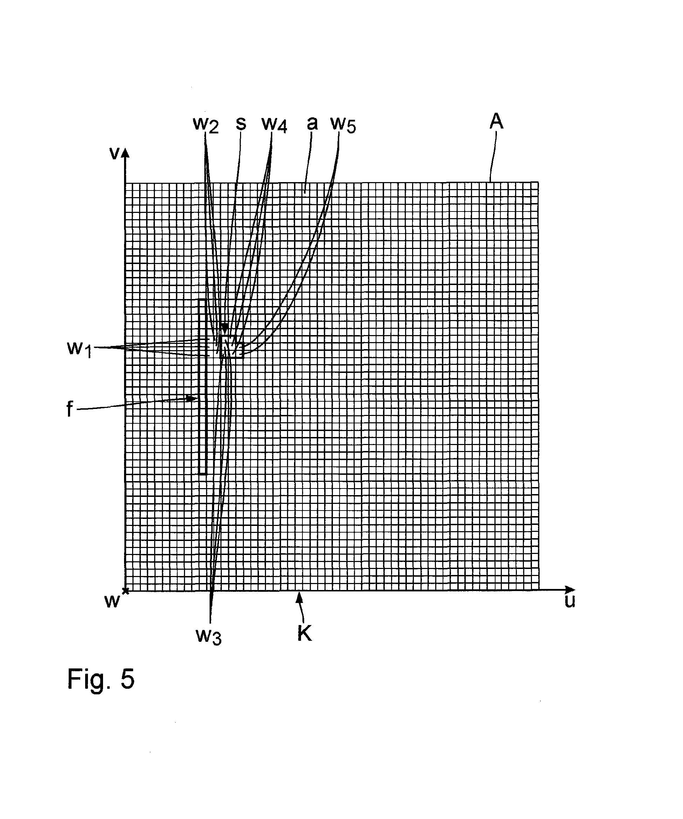

Ausgehend von dem Oberflächen-Binärdatensatz wird ein Abstandsdatensatz A derart ermittelt, dass jedem Voxel bzw. Abstandsvoxel a des Abstandsdatensatzes A ein Abstandswert wᵢ mit i = 1, 2, 3, ...zugeordnet wird, der den kleinsten Abstand des jeweiligen Abstandsvoxels a zu den Oberflächenvoxeln f charakterisiert. Dieser Verfahrensschritt wird als Distanztransformation bezeichnet. Die Abstandswerte w können beispielsweise nach einer euklidischen Metrik oder einer Manhattan- bzw. Cityblock-Metrik berechnet werden. In Fig. 5 ist der Abstandsdatensatz A mit den Oberflächenvoxeln f des Kolbenschafts 16 in einer im Vergleich zu den Fig. 3 und 4 höheren Auflösung dargestellt. Ausgehend von den Oberflächenvoxeln f weisen die Abstandsvoxel a Abstandswerte w₁, w₂, w₃... auf, die den Abstand in ganzen Voxeln beschreiben. Der Kühlkanal 20 wird durch ein Strukturvoxel s abgebildet, die ebenfalls in Fig. 5 dargestellt sind. Die Lage der Strukturvoxel s ist aus dem Struktur-Binärdatensatz bekannt, sodass die zugehörigen Abstandswerte w₃ bis w₅ anhand des Struktur-Binärdatensatzes in einfacher Weise aus dem Abstandsdatensatz A ermittelt werden können.

Der minimale Abstandswert w₃ ist ein Maß für den Abstand A_{S} des Kühlkanals 20 zu der Oberfläche des Kolbenschafts 16. Wird der Abstandswert w₃ mit der Voxelgröße multipliziert, ergibt sich der minimale Abstand A_{S} in metrischen Einheiten.

Die in den Fig. 3 bis 5 dargestellten Datensätze weisen zur einfacheren Veranschaulichung lediglich eine geringe Anzahl an Voxeln auf. Die Genauigkeit der Lagebestimmung ist umso größer, je größer die Anzahl der Voxel der Datensätze ist. Der Kühlkanal 20 wird dann durch eine Vielzahl von Strukturvoxeln s abgebildet, die unterschiedliche Abstandswerte w aufweisen. Die Strukturvoxel s müssen in der beschriebenen Weise hinsichtlich der zugehörigen Abstandswerte w ausgewertet werden. Zur Ermittlung des minimalen Abstandes A_{S} muss aus den zu den Strukturvoxeln s gehörigen Abstandswerten w der Minimalwert ermittelt werden.

Die beschriebene Auswertung wird für alle Schnittebenen S₁ bis Sₙ und für die Abstände A_{B} und A_{S} durchgeführt. Werden die ermittelten Minimalwerte für den Abstand A_{B} bzw. A_{S} über alle Schnittebenen S₁ bis Sₙ aufgetragen, so ergibt sich jeweils ein Kurvenverlauf, der mit mathematischen Methoden noch nachbearbeitbar ist. Beispielsweise können Einzelwerte, die Ausreißer darstellen, eliminiert werden und/oder mittels der Minimalwerte ein kontinuierlicher Kurvenverlauf approximiert werden.

Mit dem erfindungsgemäßen Verfahren sowie der erfindungsgemäßen Auswertevorrichtung erfolgt keine Vermessung des Abstandes zwischen zwei vordefinierten Punkten bzw. Voxeln. Das erfindungsgemäße Verfahren sowie die erfindungsgemäße Auswertevorrichtung liefern einfach, genau und automatisch den minimalen Abstand A_{S} bzw. A_{B} des Kühlkanals 20 zu der Oberfläche des Kolbenbodens 15 bzw. des Kolbenschafts 16 unabhängig davon, wie der Kühlkanal 20 in dem Kolben 5 angeordnet ist.

Wird ein zulässiger Abstand unterschritten, so kann der jeweilige Kolben 5 mittels der Inline-Prüfanlage 1 aussortiert werden.

## Patentansprüche

1. Verfahren zur Ermittlung der Lage einer in einem zu untersuchenden Objekt befindlichen, ringförmigen Struktur mittels Röntgencomputertomografie, umfassend die Schritte:
- Bereitstellen eines mittels Röntgencomputertomografie ermittelten Volumendatensatzes des zu untersuchenden Objektes (5),
- Definieren mehrerer Schnittebenen (S₁ bis Sₙ) durch die in dem Objekt (5) befindliche und in ihrer räumlichen Lage zu bestimmende Struktur (20),
- Ermitteln von jeweiligen Schnittdatensätzen aus dem Volumendatensatz, die das Objekt (5) in der jeweiligen Schnittebene (S₁) abbilden,
- Auswerten der jeweiligen Schnittdatensätze wie folgt:
- Binarisieren des Schnittdatensatzes zu einem Binärdatensatz,
- Ermitteln der die Struktur (20) abbildenden Strukturvoxel (s) in dem Binärdatensatz,
- Ermitteln der eine Objektoberfläche des Objekts (5) abbildenden Oberflächenvoxel (f) in dem Binärdatensatz,
- Ermitteln eines Abstandsdatensatzes (A) derart, dass jedem Abstandsvoxel (a) des Abstandsdatensatzes (A) ein Abstandswert (w) zugeordnet wird, der den kleinsten Abstand des jeweiligen Abstandsvoxels (a) zu den Oberflächenvoxeln (f) charakterisiert,
- Ermitteln der den Strukturvoxeln (s) entsprechenden Abstandsvoxel (a) in dem Abstandsdatensatz (A), und
- Auswerten der Abstandswerte (w) der den Strukturvoxeln (s) entsprechenden Abstandsvoxel (a).

2. Verfahren nach Anspruch 1, **dadurch gekennzeichnet, dass** vor dem Ermitteln des Abstandsdatensatzes (A) mindestens einer der Datensätze derart transformiert wird, dass zumindest ein Teil der Oberflächenvoxel (f) parallel zu einer Koordinatenachse (u, v, w) eines kartesischen Koordinatensystems (K) ausgerichtet sind.

3. Verfahren nach Anspruch 1 oder 2, **dadurch gekennzeichnet, dass** der Volumendatensatz durch folgende Schritte transformiert wird:
- Binarisieren des Volumendatensatzes zu einem binären Volumendatensatz,
- Definieren von zwei sich schneidenden Korrektur-Schnittebenen (S₁, S₂) durch das Objekt (5),
- Ermitteln von zwei Korrektur-Schnittdatensätzen aus dem binären Volumendatensatz, die das Objekt (5) in der jeweiligen Schnittebene (S₁, S₂) abbilden,
- Ermitteln von zwei Verkippungswinkeln (α) aus den Korrektur-Schnittdatensätzen, wobei jeder Verkippungswinkel (α) die Lage der eine Objektoberfläche abbildenden Oberflächenvoxel (f) relativ zu einer Koordinatenachse (u, v, w) eines kartesischen Koordinatensystems (K) charakterisiert, und
- Transformieren des Volumendatensatzes mittels der ermittelten Verkippungswinkel (α) derart, dass die zum Ermitteln der Verkippungswinkel (α) verwendeten Oberflächenvoxel (f) parallel zu jeweils einer der Koordinatenachsen (u, v, w) verlaufen.

4. Verfahren nach einem der Ansprüche 1 bis 3, **dadurch gekennzeichnet, dass** das Binarisieren des Schnittdatensatzes derart erfolgt, dass
- die die Kanten des Objekts (5) abbildenden Kantenvoxel in dem Schnittdatensatz bestimmt werden,
- anhand der ermittelten Kantenvoxel für jedes Voxel in dem Schnittdatensatz die Anzahl der Schnittpunkte von mehreren unterschiedlich ausgerichteten Geraden (G₁ bis G₈) durch das Voxel mit den Kanten ermittelt wird, und
- das jeweilige Voxel in dem Binärdatensatz
-- dem Objekt (5) zugeordnet wird, wenn die Mehrheit der Geraden (G₁ bis G₈) eine ungerade Anzahl an Schnittpunkten hat, und
-- nicht dem Objekt (5) zugeordnet wird, wenn die Mehrheit der Geraden (G₁ bis G₈) eine gerade Anzahl an Schnittpunkten hat.

5. Verfahren nach einem der Ansprüche 1 bis 4, **dadurch gekennzeichnet, dass** das Ermitteln der Strukturvoxel (s) in dem Binärdatensatz derart erfolgt, dass
- zusammenhängende Voxel mit einem einheitlichen Binärwert jeweils einem Bereich zugeordnet werden,
- die Bereiche hinsichtlich mindestens einer Eigenschaft ausgewertet werden, und
- einer der Bereiche als die Struktur (20) mit den zugehörigen Strukturvoxeln (s) klassifiziert wird.

6. Verfahren nach einem der Ansprüche 1 bis 5, **dadurch gekennzeichnet, dass** ein Struktur-Binärdatensatz erzeugt wird, in dem die Strukturvoxel (s) einen ersten Binärwert und alle weiteren Voxel einen zweiten Binärwert haben.

7. Verfahren nach einem der Ansprüche 1 bis 6, **dadurch gekennzeichnet, dass** das Ermitteln der Oberflächenvoxel (f) in dem Binärdatensatz derart erfolgt, dass
- die Voxel in einer Laufrichtungdurchlaufen werden, und
- das Voxel jeweils als Oberflächenvoxel (f) ermittelt wird, das erstmalig beim Durchlaufen in der Laufrichtung als dem Objekt (5) zugeordnet detektiert wird.

8. Verfahren nach einem der Ansprüche 1 bis 7, **dadurch gekennzeichnet, dass** ein Oberflächen-Binärdatensatz erzeugt wird, in dem die Oberflächenvoxel (f) einen ersten Binärwert und alle weiteren Voxel einen zweiten Binärwert haben.

9. Verfahren nach Anspruch 8, **dadurch gekennzeichnet, dass** der Abstandsdatensatz (A) ausgehend von dem Oberflächen-Binärdatensatz ermittelt wird, indem in diesem den mit dem zweiten Binärwert versehenen Voxeln jeweils ein Abstandswert (w) zugeordnet wird und die mit dem Abstandswert (w) versehenen Voxel die Abstandsvoxel (a) bilden.

10. Verfahren nach einem der Ansprüche 6 bis 9, **dadurch gekennzeichnet, dass** das Ermitteln der den Strukturvoxeln (s) entsprechenden Abstandsvoxel (a) mittels des Struktur-Binärdatensatzes erfolgt.

11. Verfahren nach einem der Ansprüche 1 bis 10, **dadurch gekennzeichnet, dass** das Auswerten der Abstandswerte (w) der den Strukturvoxeln (s) entsprechenden Abstandsvoxel (a) derart erfolgt, dass ein Extremwertermittelt wird.

12. Verfahren nach einem der Ansprüche 1 bis 11, **dadurch gekennzeichnet, dass** die Schnittebenen (S₁ bis Sₙ) durch eine gemeinsame Achse (17) verlaufen.

13. Verfahren nach einem der Ansprüche 1 bis 12, **dadurch gekennzeichnet, dass** das Auswerten der Abstandswerte (w) der den Strukturvoxeln (s) entsprechenden Abstandsvoxel (a) in den zu den Schnittdatensätzen gehörigen Abstandsdatensätzen (A) derart erfolgt, dass
- jeweils ein Extremwertermittelt wird,
- die Extremwerte in Abhängigkeit der Schnittebenen (S₁ bis Sₙ) dargestellt werden, und
- die Extremwerte nachbearbeitet werden.

14. Auswertevorrichtung zur Ermittlung der Lage einer in einem zu untersuchenden Objekt befindlichen, ringförmigen Struktur mittels Röntgencomputertomografie, die derart ausgebildet ist, dass
- ein mittels Röntgencomputertomografie ermittelter Volumendatensatz des zu untersuchenden Objektes (5) bereitstellbar ist,
- mehrere Schnittebenen (S₁ bis Sₙ) durch die in dem Objekt (5) befindliche und in ihrer räumlichen Lage zu bestimmenden Struktur (20) definierbar sind,
- jeweilige Schnittdatensätze aus dem Volumendatensatz ermittelbar sind, die das Objekt (5) in der jeweiligen Schnittebene (S₁) abbilden,
- die jeweiligen Schnittdatensätze wie folgt auswertbar sind:
- der Schnittdatensatz zu einem Binärdatensatz binarisierbar ist,
- die die Struktur (20) abbildenden Strukturvoxel (s) in dem Binärdatensatz ermittelbar sind,
- die eine Objektoberfläche des Objekts (5) abbildenden Oberflächenvoxel (f) in dem Binärdatensatz ermittelbar sind,
- ein Abstandsdatensatz (A) derart ermittelbar ist, dass jedem Abstandsvoxel (a) des Abstandsdatensatzes (A) ein Abstandswert (w) zugeordnet wird, der den kleinsten Abstand des jeweiligen Abstandsvoxels (a) zu den Oberflächenvoxeln (f) charakterisiert,
- die den Strukturvoxeln (s) entsprechenden Abstandsvoxel (a) in dem Abstandsdatensatz (A) ermittelbar sind, und
- die Abstandswerte (w) der den Strukturvoxeln (s) entsprechenden Abstandsvoxel (a) auswertbar sind.

15. Röntgencomputertomograf, mit
- einer Röntgenquelle (6) zum Bestahlen eines zu untersuchenden Objektes (5) aus mehreren Projektionsrichtungen (ϕ) mit Röntgenstrahlung (9),
- einem Röntgendetektor (7) zum Detektieren der Röntgenstrahlung (9),
- einem Objektträger (8) zum Positionieren des Objektes (5) zwischen der Röntgenquelle (6) und dem Röntgendetektor (7), und
- einer Auswertevorrichtung (14) gemäß Anspruch 14.

## Claims

1. Method for determining the position of an annular structure located in an object to be investigated by means of X-ray computer tomography, comprising the steps:
- Providing a volume data record determined by means of X-ray computer tomography of the object (5) to be investigated,
- Defining a plurality of cutting planes (S₁ to Sₙ) through the structure (20) located in the object (5) and to be determined with respect to its spatial position,
- Determining respective cutting data records from the volume data record, which image the object (5) in the respective cutting plane (S₁),
- Evaluating the respective cutting data records as follows:
- Binarising the cutting data record to form a binary data record,
- Determining the structure voxels (s) imaging the structure (20) in the binary data record,
- Determining the surface voxels (f) imaging an object surface of the object (5) in the binary data record,
- Determining a distance data record (A) in such a way that a distance value (w), which characterises the smallest distance of the respective distance voxel (a) from the surface voxels (f) is assigned to each distance voxel (a) of the distance data record (A),
- Determining the distance voxels (a) corresponding to the structure voxels (s) in the distance data record (A), and
- Evaluating the distance values (w) of the distance voxels (a) corresponding to the structure voxels (s).

2. Method according to claim 1, **characterised in that** before the determination of the distance data record (A), at least one of the data records is transformed in such a way that at least some of the surface voxels (f) are aligned parallel to a coordinate axis (u, v, w) of a Cartesian coordinate system (K).

3. Method according to claim 1 or 2, **characterised in that** the volume data record is transformed by the following steps:
- Binarising the volume data record to form a binary volume data record,
- Defining two intersecting correction cutting planes (S₁, S₂) through the object (5),
- Determining two correction cutting data records from the binary volume data record, which image the object (5) in the respective cutting plane (S₁, S₂),
- Determining two tilt angles (α) from the correction cutting data records, each tilt angle (α) characterising the position of the surface voxels (f) imaging an object surface relative to a coordinate axis (u, v, w) of a Cartesian coordinate system (K), and
- Transforming the volume data record by means of the determined tilt angles (α) in such a way that the surface voxels (f) used to determine the tilt angles (α) run parallel to one of the coordinate axes (u, v, w) in each case.

4. Method according to any one of claims 1 to 3, **characterised in that** the binarisation of the cutting data record takes place in such a way that
- the edge voxels imaging the edges of the object (5) are determined in the cutting data record,
- the number of intersection points of a plurality of differently aligned straight lines (G₁ to G₈) through the voxel with the edges is determined with the aid of the edge voxels determined for each voxel in the cutting data record, and
- the respective voxel in the binary data record
-- is assigned to the object (5), when the majority of the straight lines (G₁ to G₈) has an uneven number of intersection points, and
-- is not assigned to the object (5) when the majority of the straight lines (G₁ to G₈) has an even number of intersection points.

5. Method according to any one of claims 1 to 4, **characterised in that** the determination of the structure voxels (s) in the binary data record takes place in such a way that
- connected voxels with a uniform binary value are in each case assigned to a region,
- the regions are evaluated with respect to at least one property, and
- one of the regions is classified as the structure (20) with the associated structure voxels (s).

6. Method according to any one of claims 1 to 5, **characterised in that** a structure binary data record is produced, in which the structure voxels (s) have a first binary value and all the further voxels have a second binary value.

7. Method according to any one of claims 1 to 6, **characterised in that** the determination of the surface voxels (f) in the binary data record takes place in such a way that
- the voxels are run through in one running direction, and
- the voxel is in each case determined as a surface voxel (f), which is firstly detected during the run-through in the running direction as assigned to the object (5).

8. Method according to any one of claims 1 to 7, **characterised in that** a surface binary data record is produced, in which the surface voxels (f) have a first binary value and all the further voxels have a second binary value.

9. Method according to claim 8, **characterised in that** the distance data record (A) is determined proceeding from the surface binary data record, **in that** therein a distance value (w) is in each case assigned to the voxels provided with the second binary value and the voxels provided with the distance value (w) form the distance voxels (a).

10. Method according to any one of claims 6 to 9, **characterised in that** the determination of the distance voxels (a) corresponding to the structure voxels (s) takes place by means of the structure binary data record.

11. Method according to any one of claims 1 to 10, **characterised in that** the evaluation of the distance values (w) of the distance voxels (a) corresponding to the structure voxels (s) takes place in such a way that an extreme value is determined.

12. Method according to any one of claims 1 to 11, **characterised in that** the cutting planes (S₁ to Sₙ) run through a common axis (17).

13. Method according to any one of claims 1 to 12, **characterised in that** the evaluation of the distance values (w) of the distance voxels (a) corresponding to the structure voxels (s) in the distance data records (A) belonging to the cutting data records takes place in such a way that
- an extreme value is determined in each case,
- the extreme values are shown as a function of the cutting planes (S₁ to Sₙ), and
- the extreme values are reworked.

14. Evaluation device for determining the position of an annular structure located in an object to be investigated by means of X-ray computer tomography, which is configured in such a way that
- a volume data record determined by means of X-ray computer tomography of the object (5) to be investigated is providable,
- a plurality of cutting planes (S₁ to Sₙ) through a structure (20) located in the object (5) and to be determined with respect to their spatial position are definable,
- respective cutting data records are determinable from the volume data record, which image the object (5) in the respective cutting plane (S₁),
- the respective cutting data records are evaluable as follows:
- the cutting data record is binarisable to form a binary data record,
- the structure voxels (s) imaging the structure (20) are determinable in the binary data record,
- the surface voxels (f) imaging an object surface of the object (5) are determinable in the binary data record,
- a distance data record (A) is determinable in such a way that a distance value (w), which characterises the smallest distance of the respective distance voxel (a) from the surface voxels (f) is assigned to each distance voxel (a) of the distance data record (A),
- the distance voxels (a) corresponding to the structure voxels (s) in the distance data record (A) are determinable, and
- the distance values (w) of the distance voxels (a) corresponding to the structure voxels (s) are evaluatable.

15. X-ray computer tomograph, with
- an X-ray source (6) for irradiating an object (5) to be investigated from a plurality of projection directions (ϕ) with X-radiation (9),
- an X-ray detector (7) to detect the X-radiation (9),
- an object carrier (8) for positioning the object (5) between the X-ray source (6) and the X-ray detector (7), and
- an evaluation device (14) according to claim 14.

## Revendications

1. Procédé destiné à déterminer la position d'une structure de forme annulaire se trouvant dans un objet à examiner au moyen d'une tomographie aux rayons X assistée par ordinateur, comprenant les étapes :
- de mise au point d'un ensemble de données de volume de l'objet (5) à examiner, déterminé au moyen d'une tomographie aux rayons X assistée par ordinateur,
- de définition de plusieurs plans de coupe (S₁ à Sₙ) par l'intermédiaire de la structure (20) à déterminer se trouvant dans l'objet (5) et dans sa position spatiale, et
- de détermination des ensembles de données des coupes respectives à partir de l'ensemble de données de volume, qui représentent l'objet (5) dans le plan de coupe (S₁) respectif,
- de traitement des ensembles de données des coupes respectives de la manière suivante :
- binairisation de l'ensemble de données d'une coupe sous la forme d'un ensemble de données binaires,
- détermination des voxels (s) de structure représentant la structure (20) dans l'ensemble de données binaires,
- détermination des voxels (f) de surface représentant une surface d'objet de l'objet (5) dans l'ensemble de données binaires,
- détermination d'un ensemble de données de distance (A) de telle sorte qu'une valeur (w) de distance est associée à chaque voxel (a) de distance de l'ensemble de données de distance (A), qui caractérise la plus petite distance du voxel (a) de distance respectif jusqu'aux voxels (f) de surface,
- détermination des voxels (a) de distance correspondant aux voxels (s) de structure dans l'ensemble de données de distance (A), et
- traitement des valeurs (w) de distance des voxels (a) de distance correspondants aux voxels (s) de structure.

2. Procédé selon la revendication 1, **caractérisé en ce qu'**avant la détermination de l'ensemble de données de distance (A) au moins un des ensembles de données est transformé de telle sorte qu'au moins une partie des voxels (f) de surface est orientée parallèlement à un axe de coordonnées (u, v, w) d'un système de coordonnées cartésiennes (K).

3. Procédé selon les revendications 1 ou 2, **caractérisé en ce que** l'ensemble de données de volume est transformé par l'intermédiaire des étapes suivantes :
- binairisation de l'ensemble de données de volume sous la forme d'un ensemble de données de volume binaire,
- définition de deux plans de coupe de correction (S₁, S₂) sécants par l'objet (5),
- détermination de deux ensembles de données de coupes de correction à partir de l'ensemble de données de volume binaire, qui représentent l'objet (5) dans le plan de coupe (S₁, S₂) respectif,
- détermination de deux angles (α) de basculement à partir des ensembles de données des coupes de correction, chaque angle (α) de basculement caractérisant la position du voxel (f) de surface représentant une surface d'objet par rapport à un axe de coordonnées (u, v, w) d'un système de coordonnées cartésiennes (K), et
- transformation de l'ensemble des données de volume au moyen de l'angle (α) de basculement déterminé de telle sorte que les voxels (f) de surface employés pour la détermination de l'angle (α) de basculement s'étendent parallèles par rapport à l'un des axes de coordonnées (u, v, w).

4. Procédé selon l'une des revendications 1 à 3, **caractérisé en ce que** la binairisation de l'ensemble de données des coupes se déroule de telle manière que
- les voxels de bord représentant les bords de l'objet (5) sont évalués dans l'ensemble de données des coupes,
- le nombre de points d'intersection de plusieurs droites (G₁ à G₈) orientées de manière différente est déterminé par le voxel avec les bords à l'aide du voxel de bord déterminé pour chaque voxel dans l'ensemble de données des coupes, et
- le voxel respectif dans l'ensemble de données binaires
-- est associé à l'objet (5), lorsque la plupart des droites (G₁ à G₈) possède un nombre impair de points d'intersection, et
-- n'est pas associé à l'objet (5), lorsque la plupart des droites (G₁ à G₈) possède un nombre pair de points d'intersection.

5. Procédé selon l'une des revendications 1 à 4, **caractérisé en ce que** la détermination du voxel (s) de structure est effectuée dans l'ensemble de données binaires de telle sorte que
- des voxels reliés entre eux sont respectivement associés à un domaine comprenant une valeur binaire homogène,
- les domaines sont exploités par rapport à au moins une propriété, et
- l'un des domaines est classé en tant que structure (20) avec les voxels (s) de structure correspondants.

6. Procédé selon l'une des revendications 1 à 5, **caractérisé en ce qu'**un ensemble de données binaires de structure est engendré, dans lequel les voxels (s) de structure possèdent une première valeur binaire et tous les autres voxels possèdent une deuxième valeur binaire.

7. Procédé selon l'une des revendications 1 à 6, **caractérisé en ce que** la détermination du voxel (f) de surface est effectuée dans l'ensemble de données binaires de telle sorte que
- les voxels sont parcourus dans une direction de déplacement, et
- le voxel, qui, respectivement, est détecté comme associé à l'objet (5) la première fois lors du passage dans la direction de déplacement, est déterminé en tant que voxel (f) de surface.

8. Procédé selon l'une des revendications 1 à 7, **caractérisé en ce qu'**un ensemble de données binaires de surface est généré, dans lequel les voxels (f) de surface possèdent une première valeur binaire et tous les autres voxels possèdent une deuxième valeur binaire.

9. Procédé selon la revendication 8, **caractérisé en ce que** l'ensemble de données de distance (A) est évalué en partant de l'ensemble de données binaires de surface, par le fait qu'une valeur (w) de distance est chaque fois associée aux voxels munis de la deuxième valeur binaire et qui forment avec les voxels munis d'une valeur (w) de distance les voxels (a) de distance.

10. Procédé selon l'une des revendications 6 à 9, **caractérisé en ce que** la détermination des voxels (a) de distance correspondant aux voxels (s) de structure est réalisée au moyen de l'ensemble de données binaires de structure.

11. Procédé selon l'une des revendications 1 à 10, **caractérisé en ce que** le traitement des valeurs (w) de distance des voxels (a) de distance correspondant aux voxels (s) de structure s'effectue de telle manière qu'une valeur extrême est déterminée.

12. Procédé selon l'une des revendications 1 à 11, **caractérisé en ce que** les plans des coupes (S₁ à Sₙ) passent par un axe commun.

13. Procédé selon l'une des revendications 1 à 12, **caractérisé en ce que** le traitement des valeurs (w) de distance des voxels (a) de distance correspondant aux voxels (s) de structure dans les ensembles de données de distance (A) correspondant aux ensembles de données des coupes, s'effectue de telle manière que
- chaque fois, une valeur extrême est déterminée,
- les valeurs extrêmes sont représentées en relation avec les plans des coupes (S₁ à Sₙ), et
- les valeurs extrêmes sont soumises à un traitement ultérieur.

14. Dispositif de traitement destiné à la détermination de la position d'une structure de forme annulaire se trouvant dans un objet à examiner au moyen d'une tomographie aux rayons X assistée par ordinateur, qui est conçu de telle manière
- qu'un ensemble de données de volume de l'objet (5) à examiner, déterminé au moyen d'une tomographie aux rayons X assistée par ordinateur, peut être mis au point,
- que plusieurs plans de coupes (S₁ à Sₙ) peuvent être définis par la structure (20) à examiner se trouvant dans l'objet (5) et dans sa position spatiale,
- que les ensembles de données des coupes correspondants peuvent être déterminés à partir de l'ensemble de données de volume, qui représentent l'objet (5) dans le plan de coupe (S₁) respectif,
- que les ensembles de données des coupes respectifs peuvent être exploités de la manière suivante :
- l'ensemble de données de coupe peut être binairisé sous la forme d'un ensemble de données binaires,
- les voxels (s) de structure représentant la structure (20) peuvent être déterminés dans l'ensemble de données binaires,
- les voxels (f) de surface représentant une surface d'objet de l'objet (5) peuvent être déterminés dans l'ensemble de données binaires,
- l'ensemble de données de distance (A) peut être déterminé de telle manière qu'une valeur (w) de distance est associée à chaque voxel (a) de distance de l'ensemble de données de distance (A), valeur qui caractérise la plus petite distance du voxel (a) de distance jusqu'aux voxels f) de surface,
- les voxels (a) de distance correspondant aux voxels (f) de structure peuvent être déterminés dans l'ensemble de données de distance (A), et
- les valeurs (w) de distance des voxels (a) de distance correspondant aux voxels (s) de structure peuvent être traitées.

15. Tomographe aux rayons X assisté par ordinateur, comprenant
- une source (6) de rayons X, destinée à l'irradiation d'un objet (5) à examiner à partir de plusieurs directions de projection, comportant un rayonnement X (9),
- un détecteur (7) de rayons X, destiné à détecter le rayonnement X (9),
- un support (8) d'objet, destiné au positionnement de l'objet (5) entre la source (6) de rayons X et le détecteur (7) de rayons X, et
- un dispositif de traitement (14) selon la revendication 14.
